# EUROPÄISCHE PATENTANMELDUNG

(11) **EP 4 653 262 A1**
(43) Veröffentlichungstag der Anmeldung: **26.11.2025**
(21) Anmeldenummer: 24177239.1
(22) Anmeldetag: 22.05.2024
(51) Int. Cl.: B60R 9/06, B60D 1/58, B62B 5/00

(54) **LASTENTRÄGER**

(71) Anmelder: Thule Sweden AB, 335 04 Hillerstorp (SE)
(72) Erfinder: Alma, Jord, Öxnevalla (SE); WEBERG, Ellen, Jönköping (SE)
(74) Vertreter: Wallentin, Lars

(57) **Zusammenfassung**

Offenbart ist ein Lastenträger mit einer Lastentragstruktur, einer Klemmanordnung zum Montieren der Lastentragstruktur an einer Fahrzeuganhängekupplung, und einer Bodenabstützanordnung zum verfahrbaren Stützen des Lastenträgers auf dem Boden. Die Bodenabstützanordnung weist zumindest ein Rad auf. Die Klemmanordnung ist zwischen einer Freigabekonfiguration, in der die Klemmanordnung in einer Einsetzrichtung auf einen Klemmabschnitt der Fahrzeuganhängekupplung aufsetzbar und von diesem abnehmbar ist, und einer Klemmkonfiguration überführbar, in der die Klemmanordnung dann, wenn die Klemmanordnung auf den Klemmabschnitt aufgesetzt ist, fest an den Klemmabschnitt geklemmt ist. Der Lastenträger ist durch Schwenken der Lastentragstruktur um eine Schwenkachse zwischen einer Montagekonfiguration, in der die Klemmanordnung an der Fahrzeuganhängekupplung und das zumindest eine Rad auf dem Boden abstützbar ist, und einer Gebrauchskonfiguration, in der Lastenträger nur an der Fahrzeuganhängekupplung abgestützt ist, überführbar. Der Lastenträger ist derart eingerichtet, dass ein erster Abstand zwischen einem Schwerpunkt der Lastentragstruktur und der Klemmanordnung in der Montagekonfiguration und der Gebrauchskonfiguration größer als ein zweiter Abstand zwischen der Schwenkachse und der Klemmanordnung ist.

## Beschreibung

### TECHNISCHES GEBIET

Die Erfindung bezieht sich auf einen Lastenträger und auf ein Verfahren zum Montieren eines Lastenträgers. Ferner bezieht sich die Erfindung auf ein am Heck eines Fahrzeugs befestigbares Produkt wie ein Zelt.

### HINTERGRUND

Lastenträger zur Befestigung am Heck eines Fahrzeugs sind aus dem Stand der Technik bekannt. Derartige Lastenträger können von einem Nutzer auf eine Anhängekupplung des Fahrzeugs aufgesetzt und an diese geklemmt werden. Die Handhabung solcher Lastenträger kann jedoch mühsam für einen Nutzer sein, insbesondere dann, wenn der Lastenträger schwer ist.

### ZUSAMMENFASSUNG DER ERFINDUNG

Es ist die Aufgabe der Erfindung, einen Lastenträger mit verbesserter Handhabbarkeit und ein verbessertes Verfahren zum Montieren eines Lastenträgers an einer Fahrzeuganhängekupplung zu schaffen. Ferner ist es Aufgabe der Erfindung, einen Lastenträger anzugeben, der eine Montage auch mit bereits daran montierter Last auf einfache Weise ermöglicht.

Die Aufgabe wird von einem Lastenträger gemäß Anspruch 1 und von einem Verfahren gemäß Anspruch 11 gelöst.

Vorteilhafte Weiterbildungen sind Gegenstand der abhängigen Ansprüche.

Offenbart ist ein Lastenträger mit einer Lastentragstruktur, einer Klemmanordnung zum Montieren der Lastentragstruktur an einer Fahrzeuganhängekupplung, und einer Bodenabstützanordnung zum verfahrbaren Stützen des Lastenträgers auf dem Boden. Die Bodenabstützanordnung weist zumindest ein Rad auf. Die Klemmanordnung ist zwischen einer Freigabekonfiguration, in der die Klemmanordnung in einer Einsetzrichtung auf einen Klemmabschnitt der Fahrzeuganhängekupplung aufsetzbar und von diesem abnehmbar ist, und einer Klemmkonfiguration überführbar, in der die Klemmanordnung dann, wenn die Klemmanordnung auf den Klemmabschnitt aufgesetzt ist, fest an den Klemmabschnitt geklemmt ist. Der Lastenträger ist durch Schwenken der Lastentragstruktur um eine Schwenkachse zwischen einer Montagekonfiguration, in der die Klemmanordnung an der Fahrzeuganhängekupplung und das zumindest eine Rad auf dem Boden abstützbar ist, und einer Gebrauchskonfiguration, in der Lastenträger nur an der Fahrzeuganhängekupplung abgestützt ist, überführbar. Der Lastenträger ist derart eingerichtet, dass ein erster Abstand zwischen einem Schwerpunkt der Lastentragstruktur und der Klemmanordnung in der Montagekonfiguration und der Gebrauchskonfiguration größer als ein zweiter Abstand zwischen der Schwenkachse und der Klemmanordnung ist.

Die Lastentragstruktur kann ein Rahmen sein oder einen Rahmen aufweisen.

Die Fahrzeuganhängekupplung kann eine Kugelkupplung sein. Die Kugelkupplung weist einen Kugelkopf auf. Die Klemmanordnung kann demnach als Klemmanordnung ausgebildet sein, die dazu eingerichtet ist, an den Kugelkopf geklemmt zu werden.

Die Klemmanordnung und die Lastentragstruktur können über eine die Schwenkachse definierende Gelenkanordnung schwenkbar verbunden sein.

Die Klemmanordnung kann einen Kopplungsabschnitt aufweisen. Die Lastentragstruktur kann einen Verbindungsabschnitt aufweisen. Der Verbindungsabschnitt und die Bodenabstützanordnung können auf gegenüberliegenden Seiten der Lastentragstruktur vorgesehen sein. Der Verbindungsabschnitt kann schwenkbar an den Kopplungsabschnitt gekoppelt sein. Der Kopplungsabschnitt kann einen Vorsprung aufweisen. Der Verbindungsabschnitt kann zwei Flansche oder Schenkel aufweisen kann, die zwischen sich einen Aufnahmeraum für die Klemmanordnung definieren. Jeder Schenkel kann zur Kopplung mit dem Kopplungsabschnitt ausgebildet sein. Jeder Schenkel kann eine Öffnung zur Aufnahme des Kopplungsabschnitts aufweisen. Die Schenkel können in ihren freien Endabschnitten derart ausgebildet sein, dass ein Abstand zwischen diesen zum freien Ende hin größer wird. Die Öffnung kann im freien Endabschnitt des jeweiligen Schenkels vorgesehen sein. Die Öffnung kann eine längliche Öffnung sein.

Der Lastenträger kann eine Verriegelungsvorrichtung zum Arretieren des Lastenträgers in der Gebrauchskonfiguration aufweisen. Beispielsweise kann die Verriegelungsvorrichtung zum Arretieren der Lastentragstruktur relativ zu der Klemmanordnung ausgebildet sein. Die Verriegelungsvorrichtung kann einen Sperrabschnitt und einen Gegenabschnitt aufweisen. Der Sperrabschnitt kann zusammen mit dem Gegenabschnitt in eine formschlüssige und wieder lösbare Verbindung gebracht werden. Der Sperrabschnitt kann an der Lastentragstruktur vorgesehen sein und der Gegenabschnitt kann an der Klemmanordnung vorgesehen sein. Der Sperrabschnitt kann einen Hakenabschnitt aufweisen. Der Gegenabschnitt kann als Stützabschnitt für den Hakenabschnitt ausgebildet sein. Der Gegenabschnitt kann beispielsweise durch eine an dem Gehäuse befestigte Stange gebildet sein.

Die Lastentragstruktur kann permanent an die Klemmanordnung gekoppelt sein.

Die Lastentragstruktur kann abnehmbar an die Klemmanordnung gekoppelt sein.

Die Klemmanordnung kann starr und permanent an der Lastentragstruktur befestigt sein. Die Klemmanordnung kann einen die Schwenkachse definierenden Führungsabschnitt aufweisen. Der Führungsabschnitt kann gemeinsam mit der Fahrzeuganhängekupplung ein Gelenk bildet. Die Klemmanordnung kann einen ersten Gelenkpartner bilden und der Klemmabschnitt kann einen zweiten Gelenkpartner des Gelenks bilden.

Der Führungsabschnitt kann Gleitkontaktflächen aufweisen. Die Gleitkontaktflächen können derart an die Fahrzeuganhängekupplung angepasst sein, dass diese gemeinsam mit der Fahrzeuganhängekupplung das Gelenk bilden.

Die Klemmanordnung kann ein Gehäuse und ein außerhalb des Gehäuses vorgesehenes Betätigungsbauteil zum Überführen der Klemmanordnung zwischen der Freigabekonfiguration und der Klemmkonfiguration aufweisen. Das Betätigungsbauteil kann ein Hebel sein.

Offenbart ist ferner ein Verfahren zum Montieren eines Lastenträgers an einer Fahrzeuganhängekupplung. Der Lastenträger kann wie vorstehend beschrieben aufgebaut sein. Der Lastenträger kann eines oder mehrere der vorstehenden oder weiter unten beschriebenen Merkmale aufweisen. Der Lastenträger kann eine Klemmanordnung, eine Lastentragstruktur und eine Bodenabstützanordnung aufweisen. Ein Schritt des Verfahrens kann ein Anordnen des Lastenträgers in einer Montagekonfiguration aufweisen. Bei der Montagekonfiguration ist die Lastentragstruktur über die Klemmanordnung an der Fahrzeuganhängekupplung abgestützt und über die Bodenabstützanordnung auf dem Boden abgestützt. Als weiteren Schritt kann das Verfahrens ein Überführen des Lastenträgers in eine Gebrauchskonfiguration aufweisen, bei der der Lastenträger nur an der Fahrzeuganhängekupplung abgestützt ist, indem die Lastentragstruktur relativ zu der Fahrzeuganhängekupplung um eine Schwenkachse geschwenkt wird, die sich in der Montagekonfiguration und der Gebrauchskonfiguration näher an der Klemmanordnung befindet als der Schwerpunkt der Lastentragstruktur.

Vor dem Anordnen des Lastenträgers in der Montagekonfiguration kann die Klemmanordnung an die Fahrzeuganhängekupplung geklemmt werden. Anschließend kann die Lastentragstruktur an die Klemmanordnung gekoppelt werden.

Alternativ kann bei dem Anordnen des Lastenträgers in der Montagekonfiguration die Klemmanordnung an die Fahrzeuganhängekupplung geklemmt werden.

Alternativ kann die Klemmanordnung erst an die Fahrzeuganhängekupplung geklemmt werden, wenn die Lastentragstruktur um die Schwenkachse geschwenkt wurde, um die Gebrauchskonfiguration herbeizuführen.

### KURZBESCHREIBUNG DER ZEICHNUNGEN

Die beigefügten Figuren veranschaulichen Ausführungsformen der Erfindung. Gleiche Bezugszeichen kennzeichnen gleiche oder funktionell ähnliche Merkmale.
Fig. 1 zeigt eine Seitenansicht von einem Heck eines Fahrzeugs und von einem Lastenträger gemäß einer Ausführungsform, der hinter dem Fahrzeug positioniert ist und auf dem Boden abgestützt ist.
Fig. 2 zeigt das in Fig. 1 dargestellte Heck des Fahrzeugs und den Lastenträger in einer Montagekonfiguration, bei der Lastenträger an einer Fahrzeuganhängekupplung des Fahrzeugs und am Boden abgestützt ist.
Fig. 3 zeigt das in Fig. 1 dargestellte Heck des Fahrzeugs und den Lastenträger in einer Gebrauchskonfiguration, bei der der Lastenträger nur an der Fahrzeuganhängekupplung abgestützt ist.
Fig. 4 zeigt eine Seitenansicht von einer Fahrzeuganhängekupplung und von einem Lastenträger gemäß einer weiteren Ausführungsform, der hinter dem Fahrzeug positioniert ist und auf dem Boden abgestützt ist.
Fig. 5 zeigt die in Fig. 4 dargestellte Fahrzeuganhängekupplung des Fahrzeugs und den Lastenträger in einer Montagekonfiguration, bei der Lastenträger an der Fahrzeuganhängekupplung und am Boden abgestützt ist.
Fig. 6 zeigt die in Fig. 4 dargestellte Fahrzeuganhängekupplung und den Lastenträger in einer Gebrauchskonfiguration, bei der der Lastenträger nur an der Fahrzeuganhängekupplung abgestützt ist.
Fig. 7 zeigt eine Fahrzeuganhängekupplung und eine darüber angeordnete Klemmanordnung eines Lastenträgers gemäß einer weiteren Ausführungsform.
Fig. 8 zeigt die in Fig. 7 gezeigte Klemmanordnung in einem Zustand, in dem diese auf der Fahrzeuganhängekupplung befestigt ist.
Fig. 9 zeigt eine Lastentragstruktur des Lastenträger, die hinter dem Fahrzeug positioniert ist und auf dem Boden abgestützt ist.
Fig. 10 zeigt einen Zustand, bei der die in Fig. 9 dargestellte Lastentragstruktur über die Klemmanordnung an der Fahrzeuganhängekupplung und am Boden abgestützt ist, wodurch sich der Lastenträger in einer Montagekonfiguration befindet.
Fig. 11 zeigt einen Zustand, bei der die in Fig. 10 an die Klemmanordnung gekoppelte Lastentragstruktur um die Klemmanordnung geschwenkt ist, wodurch sich der Lastenträger in einer Gebrauchskonfiguration befindet.

### DETAILLIERTE BESCHREIBUNG

Ausführungsformen der Erfindung werden unter Bezugnahme auf die Figuren näher erläutert.

Alle in den Figuren dargestellten Ausführungsformen weisen einen Lastenträger 5 mit einer Klemmanordnung 10 und einer Lastentragstruktur 20 auf.

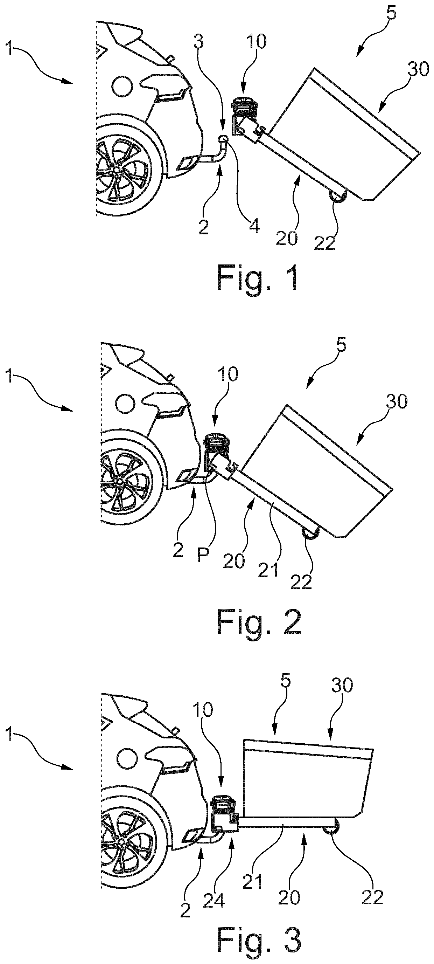

Die Klemmanordnung 10 bildet eine Kupplungsanordnung zur Montage des Lastenträgers 5 an einer Fahrzeuganhängekupplung 2, die an einem Fahrzeug 1 vorgesehen ist. In den Figuren ist eine Fahrzeuganhängekupplung 2 mit einem Klemmabschnitt 3 gezeigt. Der Klemmabschnitt kann ein Kugelkopf 4 sein. Die Fahrzeuganhängekupplung 2 kann, wie in den Figuren 1 bis 3 gezeigt, am Heck eines Fahrzeugs 1 befestigt sein.

Die Lastentragstruktur 20 kann eine Last 30 tragen, beispielsweise eine Last mit hohem Gewicht von mehr als 30kg. Die Last kann ein Zelt sein. An der Lastentragstruktur können alternativ auch Radstützabschnitte vorgesehen sein, die zum Abstützen schwerer Fahrräder, wie beispielsweise E-Bikes oder Pedelecs, geeignet sind und dementsprechend tragfähig ausgebildet sind. Der Lastenträger kann auch selbst bereits ein erhöhtes Eigengewicht aufweisen, beispielsweise ein Eigengewicht von mehr als 20kg, um den Transport von schweren Gegenständen geeignet zu ermöglichen. Der Lastenträger kann gemeinsam mit der darauf abgestützten Last ein Produkt bilden, wie beispielsweise ein Autozelt für die Anhängekupplung. Der Lastenträger kann demnach in ein solches Produkt, beispielsweise ein Autozelt, integriert sein. Dabei kann die Lastentragstruktur 20 untrennbar mit dem Produkt, beispielsweise Autozelt, verbunden sein bzw. kann die Lastentragstruktur 20 in das Autozelt integriert sein.

Um einem Nutzer eine verbesserte Handhabung des Lastenträgers 5 zu ermöglichen, weisen die Lastenträger gemäß allen Ausführungsformen eine Bodenabstützanordnung 22 auf. Die Bodenabstützanordnung 22 weist ein Rad auf oder ist als Rad ausgebildet. Das Rad kann um eine Drehachse drehbar an der Lastentragstruktur 20 vorgesehen oder gehalten sein. Das Rad 22 oder die Bodenabstützanordnung 22 kann an einem hinteren Endabschnitt der Lastentragstruktur vorgesehen sein. Die Drehachse kann sich in Querrichtung des Lastenträgers erstrecken. Es können mehrere Räder 22 vorgesehen sein, die in Querrichtung entlang der Drehachse beabstandet sind. Die Lastentragstruktur kann einen Rahmen aufweisen. Der Rahmen kann beispielsweise U-förmig ausgebildet sein, wobei die Schenkel der U-Form in Längsrichtung des Lastenträgers nach hinten orientiert sind. Ein Verbindungssteg der U-Form ist an die Klemmanordnung gekoppelt oder an diese koppelbar. An jeweils einem freien Ende der Schenkel kann ein Rad vorgesehen sein. Beispielsweise kann jeweils ein Rad drehbar an dem freien Endabschnitt eines Schenkels befestigt sein, beispielsweise über einen Drehzapfen oder einen Bolzen. Der Rahmen kann jedoch auch andersartig ausgestaltet sein. Das Rad 22 kann auch über ein Abstandsbauteil an der Lastentragstruktur befestigt sein. Anders gesagt kann eine Drehachse des Rads 22 auch beabstandet zu der Lastentragstruktur vorgesehen sein.

Bei allen Ausführungsformen ist der Lastenträger 5 so ausgebildet, dass dieser in einen Zustand gebracht werden kann, bei dem er einerseits auf dem Boden und andererseits an der Fahrzeuganhängekupplung abgestützt ist. Ein solcher Zustand wird auch als Montagekonfiguration bezeichnet. Insbesondere kann in der Montagekonfiguration eine Abstützung vorgesehen sein, beispielsweise eine Drei-Punkt-Abstützung vorgesehen sein, bei der der Lastenträger am Kugelkopf der Fahrzeuganhängekupplung abgestützt ist und über zumindest ein Rad, beispielsweise zwei Räder, auf dem Boden abgestützt ist. Auf diese Weise kann der Lastenträger bzw. das Produkt sicher am Fahrzeug abgestützt werden, bevor dieser dann in eine Gebrauchskonfiguration überführt wird, in der der Lastenträger bzw. das Produkt nur noch an der Fahrzeuganhängekupplung 2 abgestützt sind.

Zum Überführen des Lastenträgers in die Gebrauchskonfiguration wird bei allen Ausführungsformen die Lastenstützstruktur 20 durch den Nutzer um eine Schwenkachse P aufwärts geschwenkt. Der Lastenträger bzw. das Produkt sind dabei derart eingerichtet, dass ein erster Abstand zwischen dem Schwerpunkt der Lastentragstruktur (mit oder ohne Last) und der Klemmanordnung in der Montagekonfiguration und der Gebrauchskonfiguration größer als ein zweiter Abstand zwischen der Schwenkachse und der Klemmanordnung ist. Beispielsweise können die Klemmanordnung und die Bodenstützanordnung auf gegenüberliegenden Seiten der Lastentragstruktur 20 vorgesehen sein. Beispielsweise kann die Klemmanordnung an einem vorderen Abschnitt der Lastentragstruktur vorgesehen sein und kann das Rad bzw. können die Räder an einem hinteren Abschnitt der Lastentragstruktur vorgesehen sein, so dass sich der Schwerpunkt immer zwischen der Klemmanordnung und dem Rad bzw. den Rädern befindet. Der Lastenträger bzw. das Produkt können so ausgebildet sein, dass lediglich eine einzige Schwenkachse definiert wird, nämlich die Schwenkachse, um die die Lastentragstruktur geschwenkt wird, um diese von der Montagekonfiguration in die Gebrauchskonfiguration zu überführen.

In den Figuren 1 bis 3 ist eine erste Ausführungsform eines Lastenträgers 5 gezeigt. Der Lastenträger 5 weist eine Klemmanordnung 10 und eine Lastentragstruktur 20 auf. Auf der Lastentragstruktur 20 ist eine Last 30 befestigt. Die Last 30 kann ein Autozelt sein.

Die Lastentragstruktur 20 kann einen Rahmen 21 aufweisen. Die Last 30 kann an dem Rahmen 21 befestigt sein bzw. von diesem getragen werden. Der Rahmen 21 kann eine Stützplattform bilden. An einem hinteren Endabschnitt der Lastentragstruktur 20 ist einen Bodenabstützanordnung 22 vorgesehen, die ein Rad aufweist. Der hintere Endabschnitt ist ein Bereich der Lastentragstruktur, der sich auf der dem Fahrzeug abgewandten Seite des Lastenträgers befindet, wenn der Lastenträger 5 am Fahrzeug montiert ist.

Die Klemmanordnung 10 ist schwenkbar um eine Schwenkachse P an die Lastentragstruktur 20 gekoppelt. Wie in den Figuren 1 bis 3 gezeigt, ist die Klemmanordnung 10 an einem vorderen Endabschnitt des Lastenträgers 10 vorgesehen. Der vordere Endabschnitt ist dabei der Endabschnitt des Lastenträgers 5, der dem Fahrzeug am nächsten ist, wenn der Lastenträger 5 am Fahrzeug montiert ist.

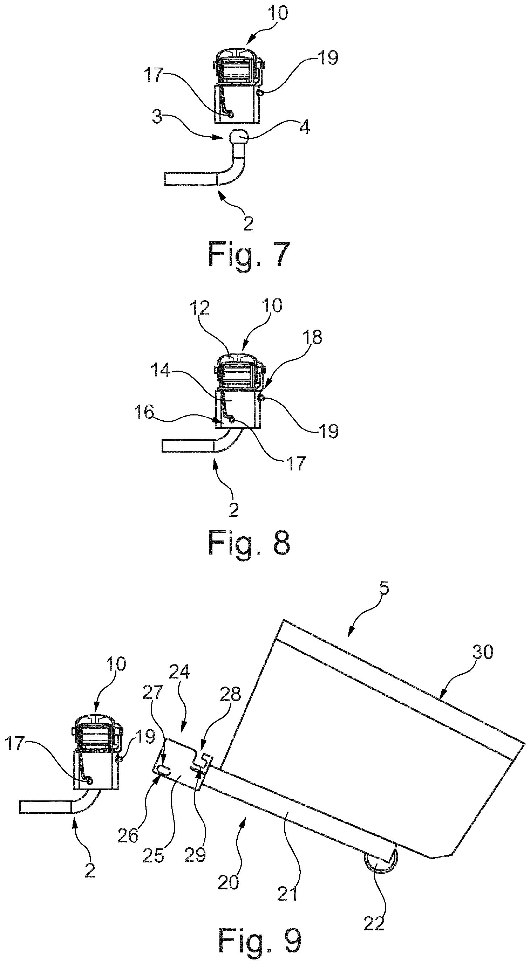

Die Klemmanordnung 10 kann wie in den Figuren 7 und 8 dargestellt aufgebaut sein. Die Klemmanordnung 10 kann insbesondere dazu eingerichtet sein, um an einen Klemmabschnitt 3 geklemmt zu werden. Der Klemmabschnitt 3 kann einen Kugelkopf 4 aufweisen. Die Klemmanordnung kann einen Klemmmechanismus aufweisen. Die Klemmanordnung 10 kann ein Gehäuse 14 aufweisen. Der Klemmmechanismus kann in dem Gehäuse untergebracht sein. Die Klemmanordnung 10 weist ferner ein Betätigungsbauteil 12 auf. Das Betätigungsbauteil 12 kann ein Hebel sein. Das Betätigungsbauteil kann oben an der Klemmanordnung 10 vorgesehen sein. Das Betätigungsbauteil 12 ist mit dem Klemmmechanismus wirkgekoppelt, insbesondere derart, dass ein Nutzer den Klemmmechanismus durch Betätigung des Betätigungsbauteils 12 von einer Freigabekonfiguration in eine Klemmkonfiguration überführen kann. In der Freigabekonfiguration kann die Klemmanordnung 10 auf die Fahrzeuganhängekupplung 2 aufgesetzt oder von dieser abgenommen werden. In der Klemmkonfiguration ist die Klemmanordnung 10 dann, wenn sie auf der Fahrzeuganhängekupplung aufgesetzt ist, fest und unbeweglich an der Fahrzeuganhängekupplung 2 gehalten. Der Klemmmechanismus kann zumindest einen bewegbaren Klemmabschnitt aufweisen. Der Klemmabschnitt kann zwischen einer Freigabeposition und einer Klemmposition bewegbar sein. Befindet sich der Klemmabschnitt in der Freigabeposition, befindet sich die Klemmanordnung in der Freigabekonfiguration. Befindet sich der Klemmabschnitt in der Klemmposition, befindet sich die Klemmanordnung in der Klemmkonfiguration.

Die Klemmanordnung 10 kann ferner einen Kopplungsabschnitt 16 aufweisen. Der Kopplungsabschnitt 16 dient zur Kopplung der Lastentragstruktur 20 an die Klemmanordnung 10. Der Kopplungsabschnitt 16 kann einen Teil einer Gelenkanordnung bilden, die die Schwenkachse definiert. Der Kopplungsabschnitt 16 kann einen Vorsprung aufweisen. Der Kopplungsabschnitt 16 kann so ausgebildet sein, dass dieser einen Drehpunkt zwischen Klemmanordnung 10 und Lastentragstruktur 20 bildet bzw. die Drehachse oder Schwenkachse P definiert. Der Kopplungsabschnitt 16 kann einen Vorsprung 17 aufweisen. Obwohl nicht näher dargestellt können zwei Vorsprünge 17 auf gegenüberliegenden Seiten des Gehäuses 14 vorgesehen sein.

Die Lastentragstruktur 20 kann einen Verbindungsabschnitt 24 aufweisen. Der Verbindungsabschnitt 24 ist zur Kopplung mit der Klemmanordnung 10 ausgebildet. Der Verbindungsabschnitt 24 und die Bodenstützanordnung 22 sind auf gegenüberliegenden Seiten der Lastentragstruktur 20 vorgesehen. Der Verbindungsabschnitt 24 ist schwenkbar an den Kopplungsabschnitt 16 gekoppelt. Der Verbindungsabschnitt 24 kann zwei Flansche oder Schenkel 25 aufweisen, die zwischen sich einen Aufnahmeraum für die Klemmanordnung 10 bzw. deren Gehäuse 14 definieren. Jeder Schenkel 25 kann zur Kopplung mit dem Kopplungsabschnitt 16 einen Kopplungsabschnitt 26 mit einer Öffnung 27 oder Ausnehmung aufweisen, beispielsweise eine nach unten offene Ausnehmung oder eine geschlossene Öffnung. Die Öffnung 27 kann eine längliche Öffnung oder ein Schlitz sein. Die Öffnung 27 kann sich in Längsrichtung der Lastentragstruktur 20 erstrecken. Die Öffnung 27 kann zur Aufnahme des Vorsprungs17 ausgebildet sein. Der Vorsprung 17 kann einen runden Querschnitt aufweisen. Der Verbindungsabschnitt 24 ist bei in der Öffnung 27 aufgenommenem Vorsprung 17 zwischen einer Verriegelungsstellung und einer Entriegelungsstellung verschiebbar, wobei die letztgenannten Stellungen Endstellungen der Öffnung 27 relativ zu dem Vorsprung sein können.

Der Lastenträger kann ferner eine Verriegelungsvorrichtung zum Arretieren des Lastenträgers in der Gebrauchskonfiguration aufweisen. Eine Bewegung des Lastenträgers relativ zu der Klemmanordnung kann mit der Verriegelungsvorrichtung gesperrt werden. Die Verriegelungsvorrichtung weist einen Sperrabschnitt 28 und einen Gegenabschnitt 18 auf. Der Sperrabschnitt 28 kann zusammen mit dem Gegenabschnitt 18 in eine formschlüssige und wieder lösbare Verbindung gebracht werden. Der Sperrabschnitt 28 kann an der Lastentragstruktur 20 vorgesehen sein, insbesondere am Verbindungsabschnitt 24.

Die Klemmanordnung 10 kann den Gegenabschnitt 18 aufweisen. Der Gegenabschnitt 18 kann zur Arretierung der Lastentragstruktur 20 an der Klemmanordnung 10 vorgesehen sein. Der Gegenabschnitt 18 kann einen Eingriffsabschnitt bereitstellen. Der Gegenabschnitt 18 kann einen Vorsprung aufweisen. Der Gegenabschnitt 18 kann in einer einfachen Ausgestaltung eine Stange oder einen Stab 19 aufweisen, der am Gehäuse 14 befestigt ist, beispielsweise angeschweißt ist. Der Gegenabschnitt 18 kann an einer Rückseite des Gehäuses 14 vorgesehen sein, beispielsweise derart, dass Endabschnitte von diesem seitlich vom Gehäuse 14 weg ragen. Diese Endabschnitte können für einen Eingriff mit einem Abschnitt an der Lastentragstruktur ausgebildet sein bzw. zur Verfügung stehen.

Der Sperrabschnitt 28 kann einen Hakenabschnitt 29 aufweisen. Der Gegenabschnitt 18 kann als Stützabschnitt für den Hakenabschnitt 29 ausgebildet sein. Der Hakenabschnitt 29 kann in der Art eines Bajonettverschlusses ausgebildet sein. Beispielsweise kann der Hakenabschnitt 29 so ausgebildet sein, dass dieser durch Verschieben des Verbindungsabschnitts 24 relativ zu dem Vorsprung 17 in Eingriff mit dem Gegenabschnitt 18 gelangt.

Bei dem in den Figuren 1 bis 3 gezeigten Lastenträger kann die Montage wie folgt vorgenommen werden. Der Lastenträger wird in eine Montagekonfiguration gebracht, bei der die Lastentragstruktur 20 über die Klemmanordnung 10 and der Fahrzeuganhängekupplung 2 abgestützt ist und über die Bodenabstützanordnung 22 auf dem Boden abgestützt ist. Durch die Bodenstützanordnung 22 kann der Lastenträger 5 von einem Nutzer auf einfache Weise an das Fahrzeug gerollt werden und muss nicht getragen werden. Sobald die Klemmanordnung 10 an der Fahrzeuganhängekupplung 2 befestigt ist, kann der Nutzer den Lastenträger in die Gebrauchskonfiguration überführen. Dazu kann der Nutzer die Rückseite des Lastenträgers 5 anheben, um diesen um die Schwenkachse P in die Gebrauchskonfiguration zu verschwenken. Die Schwenkachse P ist dabei näher an der Klemmanordnung 10 vorgesehen, als der Schwerpunkt der Lastentragstruktur 20.

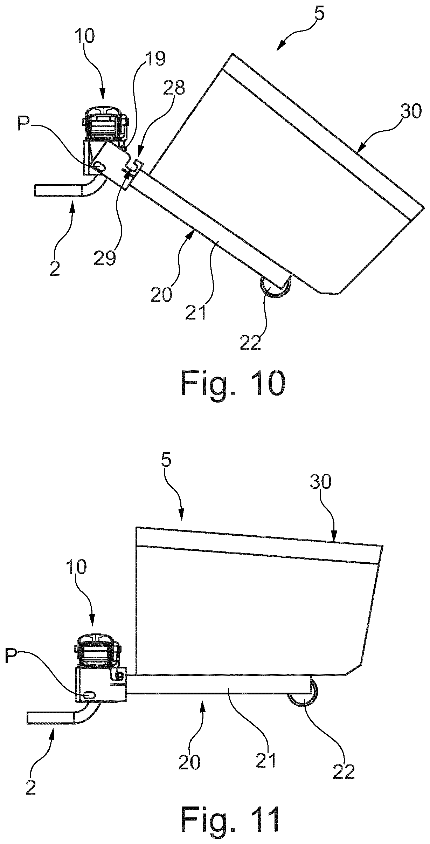

Eine weitere Ausführungsform eines Lastenträgers wird unter Bezugnahme auf die Figuren 7 bis 11 erläutert. Der Aufbau unterscheidet sich dadurch von der in den Figuren 1 bis 3 gezeigten Ausführungsform, dass die Klemmanordnung 10 von der Lastentragstruktur 20 getrennt werden kann bzw. abnehmbar ist. Auf diese Weise ist es möglich, dass ein Nutzer zunächst die Klemmanordnung 10 and der Fahrzeuganhängekupplung 2 befestigt (siehe Figuren 7 und 8), anschließend die Lastentragstruktur 20 an die Klemmanordnung 10 koppelt und damit in die Montagekonfiguration überführt (siehe Figuren 9 und 10), und dann die Lastentragstruktur 20 nach oben in die Gebrauchskonfiguration schwenkt. Ein Vorteil dieser Ausführungsform liegt darin, dass die Handhabung der Lastentragstruktur 20 einfacher wird, da diese ein um das Gewicht der Klemmanordnung 10 geringeres Gewicht aufweist. Außerdem lässt sich die Klemmanordnung 10 leichter an der Fahrzeuganhängekupplung 2 befestigen.

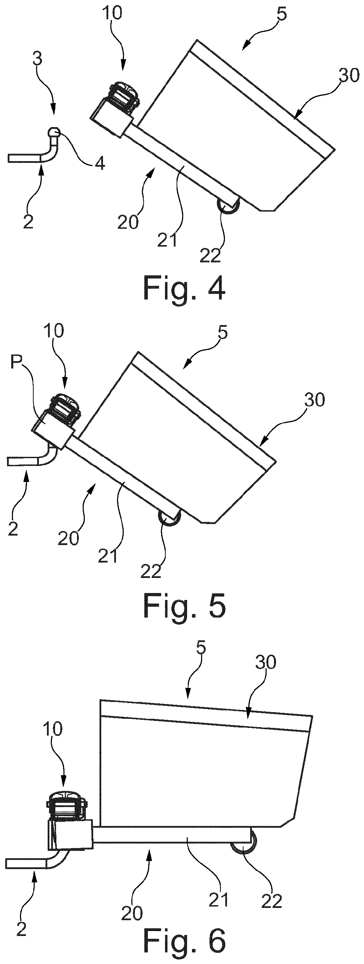

Eine andere Ausführungsform ist in den Figuren 4 bis 6 gezeigt. Bei dieser Ausführungsform ist die Lastentragstruktur 20 starr mit der Klemmanordnung verbunden bzw. an dieser befestigt. Eine Relativbewegung zwischen Klemmanordnung 10 und Lastentragstruktur 20 ist nicht möglich. Um jedoch eine ähnliche Montage wie bei den zuvor beschriebenen Ausführungsformen zu ermöglichen, weist die Klemmanordnung einen die Schwenkachse definierenden Führungsabschnitt auf, der gemeinsam mit der Fahrzeuganhängekupplung 2 ein Gelenk bildet. Die Klemmanordnung 10 kann einen ersten Gelenkpartner bilden und er Klemmabschnitt 3 kann einen zweiten Gelenkpartner bilden. Der Führungsabschnitt weist Gleitkontaktflächen auf. Diese sind derart an die Fahrzeuganhängekupplung 2 angepasst, dass diese gemeinsam mit der Fahrzeuganhängekupplung 2 das Gelenk bilden. Die Gleitkontaktflächen können kugelförmig entsprechend einem Kugelkopf der Fahrzeuganhängekupplung 2 ausgebildet sein und eine Schwenkachse P oder einen Drehpunkt definieren. Beispielsweise kann eine Gleitkontaktfläche an einem Klemmabschnitt des Klemmmechanismus vorgesehen sein. Auch kann bei der in den Figuren 4 bis 6 gezeigten Ausführungsform der Klemmmechanismus insgesamt so ausgestaltet sein, dass dieser den Klemmabschnitt 3 in der Freigabekonfiguration aufnehmen kann, wenn sich der Lastenträger 5 in der Montagekonfiguration befindet, obwohl die Klemmanordnung nicht relativ zu der Lastentragstruktur 20 beweglich ist. Ein Nutzer kann somit den gesamten Lastenträger 5 einschließlich der Klemmanordnung 10 von der Montagekonfiguration in die Gebrauchskonfiguration schwenken, ohne dass die Klemmanordnung 10 schon an die Fahrzeuganhängekupplung geklemmt ist. Die Klemmanordnung 10 kann jedoch so ausgebildet sein, dass nach dem Verschwenken des Lastenträgers 5 in die Gebrauchskonfiguration der Lastenträger 5 in der Gebrauchskonfiguration gehalten wird, obwohl die Klemmanordnung 10 noch nicht von einem Nutzer betätigt wurde. Der Nutzer kann die Klemmanordnung dann auf einfache Weise bedienen und eine feste Verbindung erzeugen.

**BEZUGSZEICHEN**

| | | | |
|---|---|---|---|
| 1 | Fahrzeug | 22 | Bodenabstützanordnung/Rad |
| 2 | Fahrzeuganhängekupplung | 24 | Verbindungsabschnitt |
| 3 | Klemmabschnitt | 25 | Schenkel |
| 4 | Kugelkopf | 26 | Kopplungsbereich |
| 5 | Lastenträger | 27 | Öffnung |
| 10 | Klemmanordnung | 28 | Sperrabschnitt |
| 12 | Betätigungsbauteil | 29 | Hakenabschnitt |
| 14 | Gehäuse | 30 | Last/Produkt/Zelt/Heckbox/ |
| 16 | Kopplungsabschnitt | P | Schwenkachse |
| 17 | Vorsprung | | |
| 18 | Gegenabschnitt | | |
| 19 | Stange/Stab | | |
| 20 | Lastentragstruktur | | |
| 21 | Rahmen | | |

## Patentansprüche

**1.** Lastenträger (5) mit
einer Lastentragstruktur (20), beispielsweise ein Rahmen (21),
einer Klemmanordnung (10) zum Montieren der Lastentragstruktur (20) an einer Fahrzeuganhängekupplung (2), beispielsweise einer Kugelkupplung, und
einer Bodenabstützanordnung (22) zum verfahrbaren Stützen des Lastenträgers auf dem Boden, wobei die Bodenabstützanordnung (22) zumindest ein Rad aufweist,
wobei die Klemmanordnung (10) zwischen einer Freigabekonfiguration, in der die Klemmanordnung (10) in einer Einsetzrichtung auf einen Klemmabschnitt (3) der Fahrzeuganhängekupplung (2) aufsetzbar und von diesem abnehmbar ist, und einer Klemmkonfiguration überführbar ist, in der die Klemmanordnung (10) dann, wenn die Klemmanordnung (10) auf den Klemmabschnitt (3) aufgesetzt ist, fest an den Klemmabschnitt (3) geklemmt ist, und
wobei der Lastenträger (5) durch Schwenken der Lastentragstruktur (2) um eine Schwenkachse (P) zwischen einer Montagekonfiguration, in der die Klemmanordnung (10) an der Fahrzeuganhängekupplung (2) und das zumindest eine Rad auf dem Boden abstützbar ist, und einer Gebrauchskonfiguration, in der Lastenträger (5) nur an der Fahrzeuganhängekupplung (2) abgestützt ist, überführbar ist,
wobei der Lastenträger (5) derart eingerichtet ist, dass ein erster Abstand zwischen einem Schwerpunkt der Lastentragstruktur (20) und der Klemmanordnung (10) in der Montagekonfiguration und der Gebrauchskonfiguration größer als ein zweiter Abstand zwischen der Schwenkachse (P) und der Klemmanordnung (10) ist.

**2.** Lastenträger (5) nach Anspruch 1, wobei die Klemmanordnung (10) und die Lastentragstruktur (20) über eine die Schwenkachse (P) definierende Gelenkanordnung schwenkbar verbunden sind.

**3.** Lastenträger (5) nach Anspruch 2,
wobei die Klemmanordnung (10) einen Kopplungsabschnitt (16) aufweist,
wobei die Lastentragstruktur (20) einen Verbindungsabschnitt (24) aufweist, wobei der Verbindungsabschnitt (24) und die Bodenabstützanordnung (22) auf gegenüberliegenden Seiten der Lastentragstruktur (20) vorgesehen sein können,
wobei der Verbindungsabschnitt (24) schwenkbar an den Kopplungsabschnitt (16) gekoppelt ist,
wobei der Kopplungsabschnitt (16) einen Vorsprung (17) aufweisen kann,
wobei der Verbindungsabschnitt (24) zwei Flansche oder Schenkel (25) aufweisen kann, die zwischen sich einen Aufnahmeraum für die Klemmanordnung (10) definieren, wobei jeder Schenkel (25) zur Kopplung mit dem Kopplungsabschnitt (16) ausgebildet sein kann, wobei jeder Schenkel (25) eine Öffnung (27) zur Aufnahme des Kopplungsabschnitts (16) aufweisen kann, wobei die Schenkel (25) in ihren freien Endabschnitten derart ausgebildet sein können, dass ein Abstand zwischen diesen zum freien Ende hin größer wird, wobei die Öffnung (27) im freien Endabschnitt des jeweiligen Schenkels (25) vorgesehen sein kann, wobei die Öffnung (27) eine längliche Öffnung sein kann.

**5.** Lastenträger (5) nach Anspruch 3, ferner mit einer Verriegelungsvorrichtung zum Arretieren des Lastenträgers (5) in der Gebrauchskonfiguration, insbesondere zum Arretieren der Lastentragstruktur (20) relativ zu der Klemmanordnung (10),
wobei die Verriegelungsvorrichtung einen Sperrabschnitt (28) und einen Gegenabschnitt (18) aufweist,
wobei der Sperrabschnitt (28) zusammen mit dem Gegenabschnitt (18) in eine formschlüssige und wieder lösbare Verbindung gebracht werden kann,
wobei der Sperrabschnitt (28) an der Lastentragstruktur (20) vorgesehen sein kann und der Gegenabschnitt (18) an der Klemmanordnung (10) vorgesehen sein kann,
wobei der Sperrabschnitt (28) einen Hakenabschnitt (29) aufweisen kann und der Gegenabschnitt (18) als Stützabschnitt für den Hakenabschnitt (29) ausgebildet sein kann, wobei der Gegenabschnitt (18) beispielsweise durch eine an dem Gehäuse befestigte Stange (19) gebildet sein kann.

**6.** Lastenträger (5) nach einem der Ansprüche 1 bis 5, wobei die Lastentragstruktur (20) permanent an die Klemmanordnung (10) gekoppelt ist.

**7.** Lastenträger (5) nach einem der Ansprüche 1 bis 5, wobei die Lastentragstruktur (20) abnehmbar an die Klemmanordnung (10) gekoppelt ist.

**8.** Lastenträger (5) nach Anspruch 1, wobei die Klemmanordnung (10) starr und permanent an der Lastentragstruktur (20) befestigt ist, und wobei die Klemmanordnung einen die Schwenkachse (P) definierenden Führungsabschnitt aufweist, der gemeinsam mit der Fahrzeuganhängekupplung (2) ein Gelenk bildet, wobei die Klemmanordnung (10) einen ersten Gelenkpartner bilden kann und der Klemmabschnitt (3) einen zweiten Gelenkpartner des Gelenks bilden kann.

**9.** Lastenträger (5) nach Anspruch 8, wobei der Führungsabschnitt Gleitkontaktflächen aufweist, die an die Fahrzeuganhängekupplung (2) derart angepasst sind, dass diese gemeinsam mit der Fahrzeuganhängekupplung (2) das Gelenk bilden.

**10.** Lastenträger (5) nach einem der vorhergehenden Ansprüche, wobei die Klemmanordnung (10) ein Gehäuse (14) und ein außerhalb des Gehäuses (14) vorgesehenes Betätigungsbauteil (12), beispielsweise ein Hebel, zum Überführen der Klemmanordnung (10) zwischen der Freigabekonfiguration und der Klemmkonfiguration aufweist.

**11.** Verfahren zum Montieren eines Lastenträgers an einer Fahrzeuganhängekupplung, wobei der Lastenträger (5) eine Klemmanordnung (10), eine Lastentragstruktur (20) und eine Bodenabstützanordnung (22) aufweist, wobei das Verfahren die folgenden Schritte aufweist:
Anordnen des Lastenträgers in einer Montagekonfiguration, bei der die Lastentragstruktur (20) über die Klemmanordnung an der Fahrzeuganhängekupplung (2) abgestützt ist und über die Bodenabstützanordnung (22) auf dem Boden abgestützt ist;
Überführen des Lastenträgers in eine Gebrauchskonfiguration, bei der der Lastenträger nur an der Fahrzeuganhängekupplung (2) abgestützt ist, indem die Lastentragstruktur (20) relativ zu der Fahrzeuganhängekupplung (2) um eine Schwenkachse (P) geschwenkt wird, die sich in der Montagekonfiguration und der Gebrauchskonfiguration näher an der Klemmanordnung (10) befindet als der Schwerpunkt der Lastentragstruktur (20).

**12.** Verfahren nach Anspruch 11, wobei vor dem Anordnen des Lastenträgers in der Montagekonfiguration die Klemmanordnung (10) an die Fahrzeuganhängekupplung (2) geklemmt wird und anschließend die Lastentragstruktur (20) an die Klemmanordnung (10) gekoppelt wird.

**13.** Verfahren nach Anspruch 11, wobei bei dem Anordnen des Lastenträgers in der Montagekonfiguration die Klemmanordnung (10) an die Fahrzeuganhängekupplung (2) geklemmt wird.

**14.** Verfahren nach Anspruch 11, wobei die Klemmanordnung (10) erst an die Fahrzeuganhängekupplung (2) geklemmt wird, wenn die Lastentragstruktur (20) um die Schwenkachse (P) geschwenkt wurde, um die Gebrauchskonfiguration herbeizuführen.
